Europäisches Patentamt

European Patent Office

Office européen des brevets

(11) Veröffentlichungsnummer: **0 003 577**
**B1**

(12) **EUROPÄISCHE PATENTSCHRIFT**

(45) Veröffentlichungstag der Patentschrift: 03.02.82

(21) Anmeldenummer: 79100318.9

(22) Anmeldetag: 02.02.79

(51) Int. Cl.³: **B 66 C 13/48,**
**B 63 B 27/10, G 05 D 3/14**

(54) Geschwindigkeitsregelung für Drehwerks- und/oder Hubwerksantriebe eines Krans.

(30) Priorität: 15.02.78 DE 2806469

(43) Veröffentlichungstag der Anmeldung:
22.08.79 Patentblatt 79/17

(45) Bekanntmachung des Hinweises auf die Patenterteilung:
03.02.82 Patentblatt 82/5

(84) Benannte Vertragsstaaten:
FR GB SE

(56) Entgegenhaltungen:
DE - A - 2 653 951
DE - B - 1 961 345
FR - A - 2 065 598

(73) Patentinhaber: SIEMENS AKTIENGESELLSCHAFT
Berlin und München
Postfach 22 02 61
D-8000 München 22 (DE)

(72) Erfinder: Bertling, Toni, Dr. Dipl.-Phys.
Anderlohrstrasse 16
D-8520 Erlangen (DE)

Courier Press, Leamington Spa, England.

Geschwindigkeitsregelung für Drehwerks- oder Hubwerksantriebe eines Krans

Die Erfindung bezieht sich auf eine Regelung für Drehwerks- oder Hubwerksantriebe eines Krans der im Oberbegriff des Anspruchs 1 angegebenen Art.

Eine derartige Regelung ist — wie noch näher ausgeführt wird — in der EU - A - 3025 (Aktenzeichen 78101601.9) beschrieben, deren Inhalt gemäß Art. 54(3) als Stand der Technik gilt.

Aus der FR - A - 2 065 598 ist eine Regelung bekannt, die die Bewegung eines am Ende einer dreigelenkigen Stellvorrichtung angebrachten Werkzeuges steuert. Die Gelenkarme sind dabei mittels Antrieben einstellbar, die je mit einer Drehwinkelregeleinrichtung ausgerüstet sind. Eine gewünschte geradlinige Bewegung des Werkzeuges wird mittels der Winkelsollwerte der einzelnen Gelenkarme errechnet. Durch Vorgabe des Winkelsollwertes des ersten Gelenkarms mittels eines Steuerhebels werden die Winkelwerte der anderen Gelenkarme abhängig von den Längen der Gelenkarme, den Werten der Winkel zu Beginn jedes Bewegungsvorganges und dem senkrechten Abstand von dem Drehpunkt des ersten Gelenkarmes zu dem Werkzeug berechnet. Die bekannte Regelung dient dem Zweck, mittels des Steuerhebels das Werkzeug entlang einer geraden Linie zu steuern, wobei die Auslenkung des Steuerhebels dem Weg proportional ist.

Die vorgenannte ältere europäische Patentanmeldung befaßt sich mit einer Regelung für Drehwerks- oder Hubwerksantriebe eines Krans, insbesondere für Schiffe, bei dem am Ende eines um ein Drehgelenk drehbaren Innenholms ein um ein Drehgelenk drehbarer Außenholms mit einem Ladeschirr angeordnet ist. Um eine Last von einem Aufnahmepunkt zu einem Absetzpunkt entlang einer vorgegebenen Linie, insbesondere einer Geraden zu bewegen, sind gemäß Anspruch 1 die Drehwerksantriebe des Innenholms und des Außenholms mit einer Drehwinkelregeleinrichtung ausgerüstet, die zur Vorgabe des Drehwinkels des Innenholms gegenüber einer Bezugslinie einen mit einem Steuerhebel versehenen Sollwertgeber besitzt, dessen Ausgangssignal einerseits zur Einstellung des Drehwinkels des Innenholms einem Regler für den Drehwerksantrieb des Innenholms und andererseits zur Einstellung des Drehwinkels des Außenholms gegenüber dem Innenholm einem Funktionsgenerator zum Bilden eines vom Drehwinkel und Verlauf des Transportweges abhängigen Winkelsollwertes zugeführt wird, der zur Vorgabe des Winkels zwischen Innenholm und Außenholm einem weiteren Regler für den Drehwerksantrieb des Außenholms zugeführt ist.

Nach dem Anspruch 4 der vorgenannten älteren Patentanmeldung ist der Drehwinkelregelung eine Geschwindigkeitsregelung derart unterlagert, daß eine vorgebbare Transportgeschwindigkeit, insbesondere eine außerhalb des Anfahr- und Bremsbereiches zumindest annähernd konstante Transportgeschwindigkeit eingehalten wird. Dabei ist für die Einstellung der Geschwindigkeit zusätzlich zum Steuerhebel für die Drehwinkelregelung ein Steuerhebel für die Geschwindigkeit vorzusehen.

Aufgabe der Erfindung ist es, die Regelung derart weiterzubilden, daß eine Last mit einer vorgegebenen Geschwindigkeit gesteuert werden kann, ohne daß ein zusätzlicher Steuerhebel erforderlich wird.

Gelöst wird diese Aufgabe bei einer Regelung der eingangs genannten Art durch die im kennzeichnenden Teil des Anspruchs 1 angegebenen Maßnahmen.

Durch die Erfindung wird der Winkelsollwert $\gamma_{soll}$ zeitabhängig von mehreren Parametern berechnet.

Auf diese Weise kann die Transportgeschwindigkeit entsprechend der Größe der Auslenkung des Steuerhebels geändert werden. Dem Sollwertgeber ist dabei ein Motor mit Potentiometer oder ein Uhrwerk nachgeschaltet oder ein Verstärker so zugeordnet, daß ein Integrator entsteht.

Zwei schematische Ausführungsbeispiele der Erfindung sind in der Zeichnung dargestellt. Darin zeigen:

In Fig. 1 ist auf einer Konsole 1 eine Säule 2 angeordnet, an der an einem festen senkrechten Dreh-3025,

Fig. 5 eine erfindungsgemäße Schaltungsanordnung zur Erzielung einer durch die Stellhebelstellung vorgebbaren Transportgeschwindigkeit und

Fig. 6 eine andere Variante.

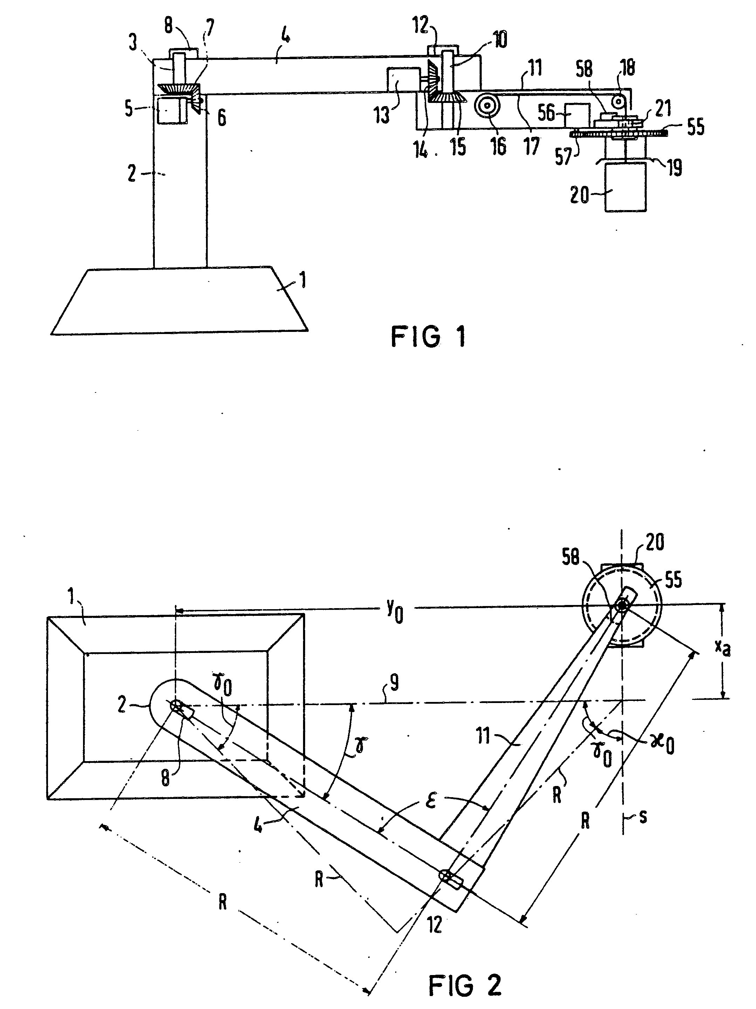

In Fig. 1 ist auf einer Konsole 1 eine Säule 2 angeordnet, an der an einem festen senkrechten Drehzapfen eines Drehgelenks 3 das eine Ende eines Innenholms 4 drehbar gelagert ist. Zum Drehen des Innenholms 4 dient ein Drehwerksantrieb, der aus einem Motor 5 und einem Getriebe mit Ritzel 6 sowie Zahnkranz 7 besteht. Ein Winkelgeber 8 dient zum Erfassen des Drehwinkels $\gamma$, den der Innenholm 4 gegenüber einer Bezugslinie 9 (Fig. 2) einnimmt. Am anderen Ende des Innenholms 4 ist ein weiteres Drehgelenk 10 für einen Außenholm 11 mit einem weiteren Winkelgeber 12 angeordnet, der den Winkel $\varepsilon$ zwischen dem Innenholm 4 und dem Außenholm 11 erfaßt. Zum Drehen des Außenholms 11 gegenüber dem Innenholm 4 dient ein weiterer Drehwerksantrieb, der aus einem Motor 13 und Getriebe mit Ritzel 14 und Zahnkranz 15 besteht. Im Außenholm 11 ist eine durch einen Motor angetriebene Winde 16 angeordnet, dessen Seil 17 über eine Laufrolle 18 am freien Ende des Außenholms 11 ein Ladegeschirr 19 für die Aufnahme einer Last 20 trägt.

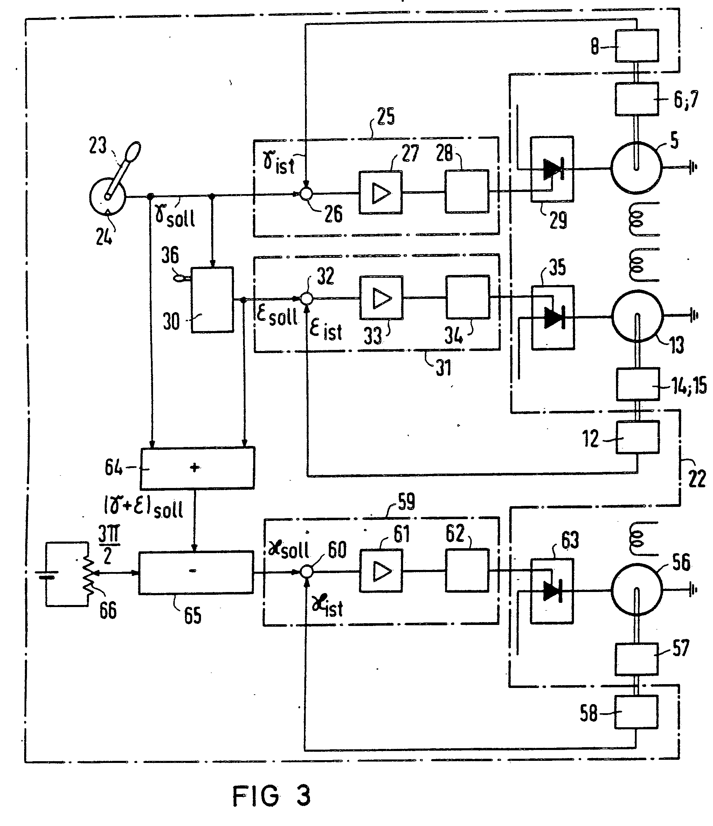

Die beiden Drehwerksantriebe 5, 6, 7 und 13, 14, 15 sind — wie Fig. 3 zeigt — mit einer Drehwinkelregeleinrichtung 22 ausgerüstet, die zur Vorgabe des Drehwinkels $\gamma$ des Innenholms 4 gege-

2

nüber der Bezugslinie 9 einen mit einem Steuerhebel 23 versehenen Sollwertgeber 24 besitzt, dessen Ausgangssignal $\gamma_{soll}$ zur Einstellung des Drehwinkels $\gamma$ des Innenholms 4 einem Regler 25 für den Drehwerksantrieb 5, 6, 7 des Innenholms zugeführt ist. Dieser Regler 25 besitzt einen Soll-Istwertvergleicher 26, einen Regelverstärker 27 und einen Steuersatz 28 für ein im Ankerkreis des Motors 5 angeordnetes elektronisches Stellglied 29. Der mit dem Motor 5 in Verbindung stehende Winkelgeber 8 liefert ein Signal, das als Istwert $\gamma_{ist}$ dem Soll-Istwertvergleicher 26 zugeführt wird.

Andererseits wird das Ausgangssignal $\gamma_{soll}$ des Sollwertgebers 24 zur Einstellung des Winkels $\varepsilon$ des Außenholms gegenüber dem Innenholm einem Funktionsgenerator 30 zum Bilden eines vom Drehwinkel $\gamma$ und Verlauf des Transportweges s abhängigen Winkelsollwertes $\varepsilon_{soll}$ zugeführt, der zur Vorgabe des Winkels $\varepsilon$ zwischen Innenholm 4 und Außenholm 11 einem Regler 31 für den Drehwerksantrieb 13, 14, 15 des Außenholms zugeführt ist. Der Regler 31 besitzt einen Soll-Istwertvergleicher 32, einen Regelverstärker 33 und einen Steuersatz 34 für ein im Ankerkreis des Motors 13 angeordnetes elektronisches Stellglied 35. Der mit dem Motor 13 verbundene weitere Winkelgeber 12 liefert den Istwert $\varepsilon_{ist}$, der dem Soll-Istwertvergleicher 32 zugeführt wird.

Mit dem Sollwertgeber 24 wird vom Kranführer der Drehwinkel des Innenholms als Sollwert vorgegeben. Abhängig von diesem Drehwinkel $\gamma$ wird im Funktionsgenerator 30 für den Drehwerksantrieb des Außenholms 11 ein Sollwert $\varepsilon_{soll}$ von solcher Größe gebildet, daß das Ladegeschirr 19 mit der Last 20 auf einem vorgegebenen Transportweg bewegt wird. Hierzu ist der Funktionsgenerator 30 derart ausgebildet, daß sein Ausgangssignal nach der mathematischen Beziehung

$$\varepsilon_{soll} = f(\gamma_{soll}, y_o) \qquad \qquad \dots (1)$$

vom Eingangssignal $\gamma_{soll}$ abhängt. Dabei ist $y_o$ ein Parameter des Transportweges von der inneren Drehachse des Innenholms 4.

Für einen geradlinigen Transportweg gilt:

$$\varepsilon_{soll} = \arccos\left[\sin\gamma_{soll}\sqrt{1-\left(\frac{y_o}{R}-\cos\gamma_{soll}\right)^2}-\cos\gamma_{soll}\left(\frac{y_o}{R}-\cos\gamma_{soll}\right)\right] \qquad \dots (2)$$

Darin bedeutet R die Länge des Innenholms 4, die im vorliegenden Fall gleich der Länge des Außenholms 11 ist. Für einen vorgegebenen Kran ist die Größe R eine Konstante. Der Wert $y_o$ kann für jeden gewünschten Transportweg zu Beginn der Ladetätigkeit in den Funktionsgenerator 30 über eine Eingabevorrichtung mit einem Stellhebel 36 eingegeben werden, er ist hier der senkrechte Abstand des Transportweges s von der inneren Drehachse des Innenholms 4.

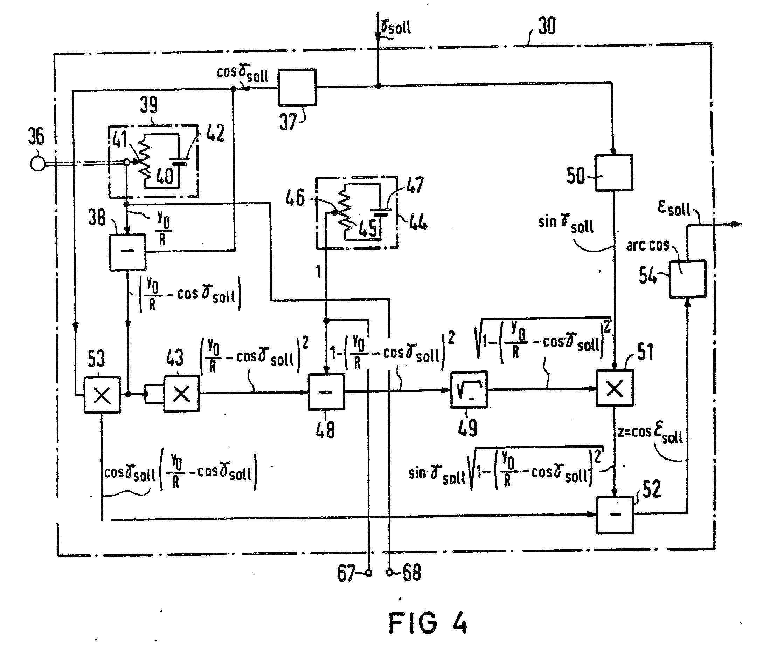

Wie Fig. 4 zeigt, befinden sich im Funktionsgenerator 30 zur Berechnung des Sollwertes $\varepsilon_{soll}$ entsprechend der oben angegebenen Beziehung (2) mehrere Rechnerbausteine. Der am Eingang des Funktionsgenerators anstehende Sollwert $\gamma_{soll}$ wird einem Cosinus-Bildner 37 zugeführt und dessen Ausgangssignal cos $\gamma_{soll}$ im Subtrahierer 38 von dem im Rechner-Baustein 39 gebildeten Signalwert

$$\frac{y_o}{R}$$

subtrahiert. Im einfachsten Fall ist der Rechner-Baustein 39 ein Potentiometer 40 mit Abgriff 41, das an einer Batterie 42 liegt. Der Abgriff ist mit dem Stellhebel 36 verbunden. Das Ausgangssignal

$$\frac{y_o}{R}$$

— cos $\gamma_{soll}$ des Subtrahierers 38 wird in einem Multiplizierer 43 quadriert. In einem Konstantwertbildner 44, der im einfachsten Fall durch ein Potentiometer 45 mit Abgriff 46 gebildet ist, welches an einer Batterie 47 liegt, wird der Wert 1 gebildet, wobei das maximale Ausgangssignal des Cosinus-Bildners 37 identisch eingestellt wird mit dem Ausgangswert des Konstantwertbildners 44. Im Subtrahierer 48 wird vom Konstantwert 1 des Konstantwertbildners 44 der Ausgangswert des Multiplizierers 43 abgezogen. Das Ausgangssignal des Subtrahierers 48 wird dem Radizierer 49 zugeführt, dessen Ausgangssignal im Multiplizierer 51 mit dem Ausgangssignal des Sinus-Bildners 50 für den Wert $\gamma_{soll}$ multipliziert wird. Der so gebildete Wert wird einem Eingang eines Subtrahierers 52 zugeführt. Der andere Eingang des Subtrahierers 52 ist mit dem Ausgang eines weiteren Multiplizierers 53 verbunden, dessen Eingänge einerseits an den Ausgang des Cosinus-Bildners 37 und an den Ausgang des Subtrahierers 38 angeschlossen sind. Der Ausgang des Subtrahierers 52 liefert das Signal cos $\varepsilon_{soll}$, welches im Baustein 54 invertiert wird, d.h. es wird der arc cos von cos $\varepsilon_{soll}$ und damit $\varepsilon_{soll}$ gebildet.

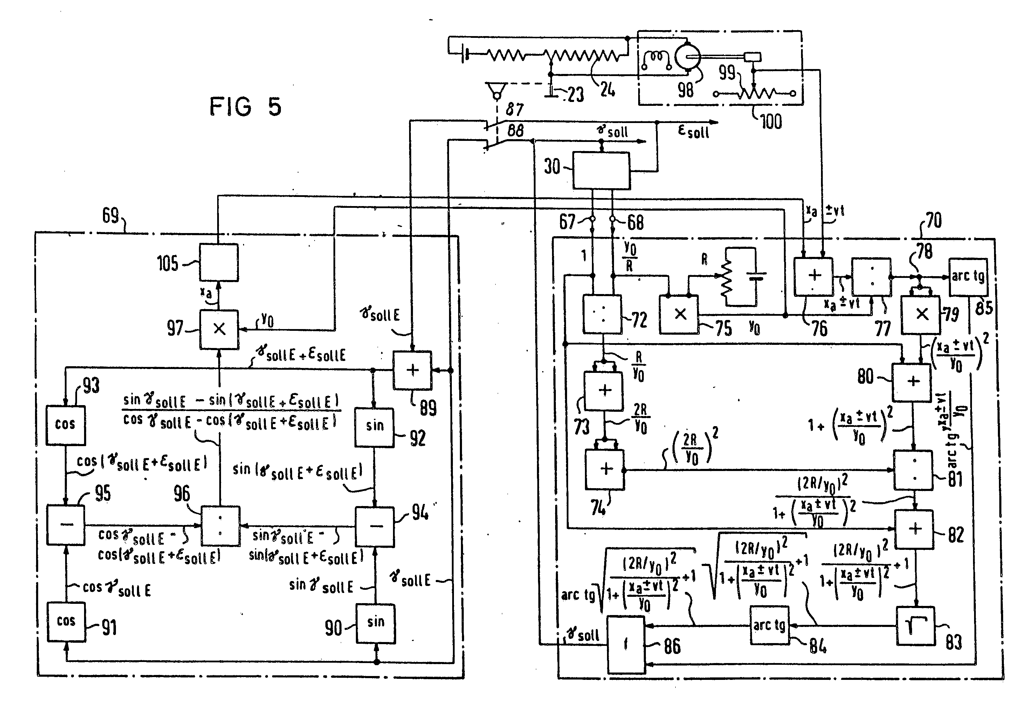

Für einen geradlinigen Transportweg und vorgegebene Werte $y_0$ und R ergibt sich die in Fig. 5 dargestellte Zuordnung von $\gamma_{soll}$ und $\varepsilon_{soll}$.

Zu Beginn eines Transportvorganges stellt der Kranführer den Kran durch Verstellen des Steuerhebels 23 (Fig. 3) so ein, daß das entlang des einzuhaltenden Transportweges s bewegte Ende des Außenholms 11 im Schnittpunkt mit der Bezugslinie 9 liegt (gestrichelte Stellung in Fig. 2). Je nach Größe des sich dabei ergebenden Startwinkels $\gamma_0$ ist dann der senkrechte Abstand $y_0$ des Transportweges von der Achse des festen Drehgelenks 3 des Innenholms 4 festgelegt. Dieser Wert $y_0$ kann von Hand mit dem Stellhebel 36 (Fig. 4) oder über eine elektrische Nachlaufschaltung abhängig vom Startwinkel $\gamma_0$ nach der Beziehung

$$y_0 = 2R \cos \gamma_0 \qquad \qquad \ldots (3)$$

automatisch in den Funktionsgenerator 30 eingegeben werden. Hierzu braucht lediglich der am Ausgang des Winkelgebers 8 in der Startposition anstehende Signalwerte über eine Rechenschaltung und eine Nachlaufschaltung mit Stellmotor zur Verstellung des Potentiometerabgriffs 41 herangezogen zu werden. Nach der Einstellung des Abgriffs 41 des Potentiometers 40 bleibt der am Potentiometer eingestellte Wert für sich wiederholende Transportvorgänge erhalten.

Der Kranführer fährt durch Betätigen des Steuerhebels 23 (Fig. 3) das Ladegut vom Aufnahmepunkt zum Absetzpunkt entlang einer Geraden.

Ist am Ende des Außenholms 11 für das Ladegeschirr 19 eine Drehscheibe 55 mit Drehwerksantrieb 56, 57, 58 angeordnet (Fig. 2), so wird der Winkel æ der mit einem Drehgelenk 21 versehenen Drehscheibe 55 zur Linie s abhängig vom Drehwinkel $\gamma$ und dem Winkel $\varepsilon$ zwischen Innenholm und Außenholm nach der Beziehung

$$æ_{soll} = \frac{3\pi}{2} - (\gamma_{soll} + \varepsilon_{soll}) \qquad \qquad \ldots (4)$$

derart gesteuert, daß die Last 20 entlang des Transportweges s parallel zu ihrer Achse verschoben wird. Dadurch kann ein Stapelvorgang zeit- und personal-sparend durchgeführt werden. Dies ist insbesondere bei automatischem Transportbetrieb, insbesondere bei Verladung durch eine Schiffsluke von Vorteil, da z.B. Container ihre parallele Lage zur Schiffslängsachse in jeder Position des Transportweges beibehalten.

Der Drehwerksantrieb für die Drehscheibe 55, bestehend aus Motor 56, Getriebe 57 und Winkelgeber 58 (Fig. 1 und 3) ist mit einem Regler 59 ausgerüstet, der einen Soll-Istwertvergleicher 60, einen Regelverstärker 61 und einen Steuersatz 62 enthält, welcher ein elektronisches Stellglied 63 für den Ankerstrom des Drehwerksmotors 56 beaufschlagt.

Der Sollwert $æ_{soll}$ wird in einem Addierer 64 und einem Subtrahierer 65 gebildet. Gemäß der mathematischen Beziehung (4) wird der Addierer 64 von den Sollwerten $\gamma_{soll}$ und $\varepsilon_{soll}$ gespeist und der Subtrahierer 65 von einem Potentiometer 66, in dem der konstante Signalwert

$$\frac{3\pi}{2}$$

gebildet wird.

Gemäß Fig. 5 ist an dem mit einem Steuerhebel 23 versehenen Sollwertgeber 24 ein Bauelement 100 angeschlossen, dessen Ausgangssignal einem Rechner 70 zur Berechnung eines gegebenen Verlaufes des Drehwinkelsollwertes $\gamma_{soll}$ zwischen dem Innenholm 4 und einer Bezugslinie 9 zugeführt wird. Das Bauelement 100 besteht aus einem von dem Sollwertgeber 24 gespeisten Motor 98, der einen Abgriff eines Potentiometers 99 so verstellt, daß in Abhängigkeit von der Zeit t ein nach einer vorgegebenen Funktion, insbesondere linearen Funktion, sich änderndes Ausgangssignal gebildet wird. Die Berechnung des Drehwinkel sollwertes $\gamma_{soll}$ erfolgt abhängig von der Zeit t für einen geradlinigen Transportweg s unter Berücksichtigung der Längen R des Innen- und Außenholms zwischen den Drehpunkten, des Abstandes $y_0$ des Transportweges s vom inneren Drehpunkt des Innenholms 4 und des senkrechten Abstandes $x_a$ der Last 20 von der Bezugslinie 9 zu Beginn jedes Transportvorganges sowie abhängig von der Stellung des Steuerhebels 23, welche die Transportgeschwindigkeit v bestimmt, nach der mathematischen Beziehung.

$$\gamma_{soll}(t) = \arctan \frac{x(t)}{y_0} + \arctan \sqrt{\frac{\left(\frac{2R}{y_0}\right)^2}{1+\left(\frac{x}{y_0}\right)^2} + 1} \qquad \ldots (5)$$

in der Weise, daß der Transportweg s festgelegt ist durch die Beziehung

$$S = \sqrt{x(t)^2 + (y_0)^2} \qquad \qquad \ldots (6)$$

und x(t) die zeitabhängige Lagekoordinate der Last ist. Dabei gilt für eine konstante Transportgeschwindigkeit v längs einer Geraden die Beziehung

$$x(t) = x_a \pm vt \qquad \qquad \ldots (7)$$

Zur Erzielung einer gewünschten Transportgeschwindigkeit wird der Stellhebel 23 entsprechend ausgelenkt. Mit dem Ausgang des Bauelements 100 ist im Rechner 70 ein Additionsglied 76 verbunden, dem ein der Position des Steuerhebels 23 entsprechender Signalwert $\pm v{\cdot}t$ zugeführt wird. Der zweite Eingang des Additionsgliedes 76 ist an einen weiteren Rechner 69 angeschlossen, in dem der Wert $x_a$ gebildet wird. Das Differenzsignal $x(t) = x_a \pm v{\cdot}t$ wird an einen Eingang eines Divisors 77 geführt, dessen anderer Eingang vom Signalwert $y_0$ gespeist wird. Dieser Wert $y_0$ wird mit Hilfe des Funktionsgenerators 30 gebildet, der zwei Ausgänge 67 und 68 hat, an denen der Signalwert

$$\frac{y_0}{R}$$

und eine Konstante Eins anstehen. An einem Potentiomer 71 wird der Signalwert R abgenommen, der mit dem Signalwert

$$\frac{y_0}{R}$$

im Multiplikator 75 verknüpft wird. Für eine andere Rechenoperation wird ein Divisor 72 mit den Signalwerten 1 und

$$\frac{y_0}{R}$$

gespeist, so daß an dessen Ausgang der reziproke Wert

$$\frac{R}{y_0}$$

entsteht. Dieser Ausgangswert wird den beiden Eingängen des Addierers 73 zugeführt und an seinem Ausgang das Signal

$$\frac{2R}{y_0}$$

gebildet. Ein nachfolgender Multiplikator 74 quadriert diesen Wert.
Der Ausgang des Divisors 77 liefert den Signalwert

$$\frac{x_a \pm v{\cdot}t}{y_0}.$$

Am Verzweigungspunkt 78 wird dieses Signal einem Multiplikator 79 zugeführt, an dessen Ausgang das Quadrat dieses Ausdruckes entsteht. Nach Addition mit dem Konstantwert Eins im Addierer 80 wird das auf diese Weise gebildete Signal einem weiteren Divisor 81 zugeleitet und dort der Quotient aus den Ausgangssignalen der Bausteine 74 und 80 gebildet. Addiert man im Addierer 82 zu dem Signal nochmals eine Konstante 1, so entsteht am Ausgang des Addierers 82 ein Signal, das nach dem Durchlaufen eines Radizierers 83 das Argument der Winkelfunktion arc tg ergibt. Wird dieses Signal dem arc tg-Bildner 84 zugeführt, so liefert dessen Ausgang die entsprechende arc tg-Funktion. Parallel zu dieser Funktionskette wird im Verzweigungspunkt 78 das Ausgangssignal des Divisors 77 an einen weiteren arc tg-Bildner 85 geführt und dessen Ausgangssignal liefert den arg tg des vom Divisor 77 stammenden Arguments. Die Ausgänge der Rechner-Bausteine 84 und 85 sind mit den Eingängen des Additionsgliedes 86 verbunden. An dessen Ausgang steht der Sollwert $\gamma_{soll}$ an, der einerseits dem Funktionsgenerator 30 und andererseits dem Regler 25 zugeführt wird.

Gleichzeitig wird der Wert $\gamma_{soll}$ auch dem zusätzlichen Rechner 69 zugeleitet und zwar immer zu Ende eines Bewegungsvorganges, d.h. wenn der Kran eine der Endlagen erreicht hat. Dan steht nämlich der Geschwindigkeitssteller 23 auf Null und die Schalter 87 und 88 werden geschlossen, so daß die jeweiligen Endwerte $\gamma_{sollE}$ und $\varepsilon_{sollE}$ Bausteinen des Rechners 69 zugeführt werden.

Im Rechner 69 summiert der Addierer 89 die Werte $\gamma_{sollE}$ und $\varepsilon_{sollE}$; dabei dient der Rechner 69 zur Berechnung der mathematischen Beziehung:

$$x_a = y_0 \frac{\sin\gamma_{soll\ E} - \sin(\gamma_{soll\ E} + \varepsilon_{soll\ E})}{\cos\gamma_{soll\ E} - \cos(\gamma_{soll\ E} + \varepsilon_{soll\ E})} \qquad \ldots (8)$$

Darin bedeutet der Index E den jeweiligen Endwert bei einem Bewegungsvorgang. Von dem Wert $\gamma_{sollE}$ wird über den Sinusbildner 90 und den cos-Bildner 91 die jeweilige trigonometrische Funktion gebildet. Gleichzeitig werden von dem Signalwert $\gamma_{sollE} + \varepsilon_{sollE}$ im Sinusbildner 92 und im cos-Bildner 93 die entsprechenden trigonometrischen Funktionswerte ermittelt. Die Ausgänge der Bausteine 90 und 92 bzw. 91 und 93 werden Subtrahierern 94 und 95 zugeführt, deren Ausgangssignale auf den Divisor 96 gegeben werden. Der Ausgang des Divisors 96 liefert ein Signal, das dem in der Gleichung (8) angegebenen Bruch entspricht und im Bausteine 97 mit dem Signalwert $y_0$ aus dem Rechner 70 multipliziert den Ausgangswert $x_a$ ergibt, der im Gedächtnis 105 so lange gespeichert wird, bis bei Erreichen einer neuen Endposition des Innen- und Außenholms ein neuer Signalwert $x_a$ eingegeben wird.

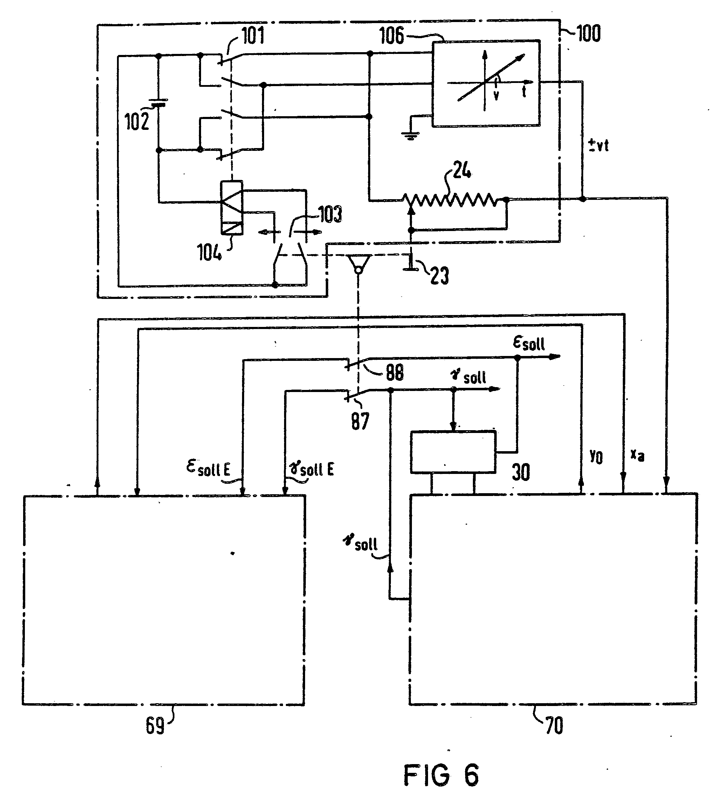

Um eine konstante Transportgeschwindigkeit zu erreichen, die nur abhängig ist von der Position des Stellhebels 23, ist dem Sollwertgeber 24 gemäß Fig. 6 ein Verstärker 106 so zugeordnet, daß er zusammen mit dem Sollwertgeber 24 einen Integrator bildet, der im Zusammenwirken mit den Schaltmitteln 101, 103 positive und negative Ausgangswerte liefern kann. Der Verstärker 106 ist hierzu über einen Kreuzschalter 101 an eine Versorgungsspannjng einer Batterie 102 angeschlossen. Wird der Steuerhebel 23 von seiner Nullage in die eine Richtung ausgelenkt, so wird über die Spule 104 der Schalter 101 in eine solche Lage gebracht, daß ein positives Ausgangssignal am Integrator gebildet wird, während bei einer Auslenkung des Steuerhebels 23 in die entgegengesetzte Seite die Spule 104 anzieht und die Batterie 102 so an den Verstärker 106 legt, daß ein negatives Ausgangssignal entsteht.

Nach Beendigung eines Bewegungsvorganges des Krans wird der Integrator selbsttätig auf Null gestellt. Der Sollwertgeber 24 ist in der Rückführung des Verstärkers 106 angeordnet und bildet mit diesem einen Integrator, so daß entsprechend der Auslegung des Stellhebels 23 eine größere Steilheit des Verstärkers 106 und damit eine höhere Geschwindigkeit v für den Transportvorgang eingestellt werden kann.

**Patentansprüche**

1. Regelung für Drehwerks- oder Hubwerksantriebe eines Krans, insbesondere für Schiffe, bei dem am Ende eines um ein Drehgelenk (3) drehbaren Innenholms (4) ein um ein Drehgelenk (10) drehbarer Außenholm (11) mit einem Ladegeschirr (19) angeordnet ist, wobei die Antriebe (5, 6, 7, 13, 14, 15) des Innenholms und des Außenholms mit einer Drehwinkelregeleinrichtung (25, 31) ausgerüstet sind, die zur Vorgabe des Drehwinkels ($\gamma$) des Innenholms (4) gegenüber einer Bezugslinie (9) einen mit einem Steuerhebel (23) versehenen Sollwertgeber (24) besitzt, dessen Ausgangssignal ($\gamma_{soll}$) einerseits zur Einstellung des Drehwinkels ($\gamma$) des Innenholms (4) einem Regler (25) für den Drehwerksantrieb des Innenholms (4) und andererseits zur Einstellung des Winkels ($\varepsilon$) des Außenholms (11) gegenüber dem Innenholm (4) einem Funktionsgenerator (30) zum Bilden eines vom Drehwinkel ($\gamma$) und Verlauf des Transportweges (s) abhängigen Winkelsollwertes ($\varepsilon_{soll}$) zugeführt wird, der zur Vorgabe des Winkels ($\varepsilon$) zwischen Innenholm (4) und Außenholm (11) einem weiteren Regler (31) für den Drehwerksantrieb des Außenholms (11) zugeführt ist, dadurch gekennzeichnet, daß zwischen dem mit dem Steuerhebel (23) versehenen Sollwertgeber (24) und dem Funktionsgenerator (30) ein Bauelement (100) mit nachgeschaltetem Rechner (70, 69) angeordnet ist, wobei im Bauelement (100) aus der vom Sollwertgeber (24) abgegebenen, der Auslenkung des Steuerhebels (23) zugeordneten Ausgangsspannung in Abhängigkeit von der Zeit (t) ein nach einer vorgegebenen, insbesonderen linearen Funktion sich ständig vergrößerndes Ausgangssignal ($\pm v \cdot t$) gebildet wird, so daß der Rechner (70, 69) den zeitlichen Verlauf des Drehwinkelsollwertes ($\gamma_{soll}$) zwischen dem Innenholm (4) und einer Bezugslinie (9) errechnet und zwar in Abhängigkeit vom Ausgangssignal ($\pm v \cdot t$) des Bauelementes (100), von der Länge (R) des Innen- und Außenholms zwischen ihren Drehpunkten, vom Abstand ($y_0$) des Lastweges (s) vom inneren Drehpunkt des Innenholms (4) und vom senkrechten Abstand ($x_a$) der Last (20) von der Bezugslinie (9) zu Beginn jedes Transportvorganges.

6

2. Regelung nach Anspruch 1, dadurch gekennzeichnet, daß das Bauelement (100) ein von einem Antriebsmotor (98) oder Uhrwerk verstellbares Potentiometer (99) ist.

3. Regelung nach Anspruch 1, dadurch gekennzeichnet, daß das Bauelement (100) ein Integrator, insbesondere ein aus elektronsichen Bauelementen aufgebauter Integrator ist.

## Revendications

1. Dispositif de réglage pour des mécanismes de commande du dispositif de rotation ou du dispositif de levage d'une grue, plus particulièrement pour des bateaux, dans lequel il est prévu à l'extrémité d'un longeron intérieur (4) tourillonné sur une articulation pivotante (3) un longeron extérieur (11) tourillonné sur une articulation pivotante (10) à apparaux de chargement, les mécanismes de commande (5, 6, 7; 13, 14) du longeron intérieur et du longeron extérieur étant équipés d'un dispositif de réglage de l'angle de rotation (25, 31) comportant, pour prescrire l'angle de rotation $(\gamma)$ du longeron intérieur (4) par rapport à une ligne de référence (9), un générateur de valeurs de consigne (24) pourvu d'un levier de commande (23) et dont le signal de sortie $(\gamma_{soll})$ est appliqué d'une part à un régulateur (25) pour le mécanisme de commande du dispositif de rotation du longeron intérieur (4) en vue du réglage de l'angle de rotation $(\gamma)$ de ce dernier et, d'autre part, et en vue du réglage de l'angle $(\varepsilon)$ du longeron extérieur (11) par rapport au longeron intérieur (4), à un générateur de fonctions (30) pour former une valeur d'angle de consigne $(\varepsilon_{soll})$ qui dépend de l'angle de rotation $(\gamma)$ et de l'allure de transport (s) et qui est appliquée, en vue de prescrire la valeur de l'angle $(\varepsilon)$ entre le longeron intérieur (4) et le longeron extérieur (11), à un second régulateur (31) pour le mécanisme d'entraînement du dispositif de rotation, caractérisé par le fait qu'il est prévu, entre le générateur de la valeur de consigne (24) pourvu du levier de commande et le générateur de fonctions (30), un composant (100) à calculateur aval (70, 79), et dans lequel composant est formé, à partir de la tension de sortie fournie par le générateur de valeurs de consigne (24) et associée au débattement du levier de commande (23) et en fonction du temps (t), un signal de sortie $(\pm v.t)$ augmentant de façon permanente suivant une fonction donnée à l'avance, en particulier linéaire, de manière que le calculateur (70, 69) calcule l'allure dans le temps de la valeur de consigne de l'angle de rotation $(\gamma_{soll})$ entre le longeron intérieur (4) et une ligne de référence (9), et en particulier en fonction du signal de sortie $(\pm v.t.)$ du composant (100), de la longueur (R) du longeron intérieur et extérieur entre leurs points d'articulation, de la distance $(y_o)$ entre le parcours de la charge (s) et le point d'articulation intérieur du longeron intérieur (4), et de la distance orthogonale $(x_a)$ entre la charge (20) et la ligne de référence (9) au début de chaque opération de transport.

2. Dispositif de réglage selon la revendication 1, caractérisé par le fait que le composant (100) est un potentiomètre (99) réglable par un moteur d'entraînement (98) ou par un mécanisme d'horlogerie.

3. Dispositif de réglage selon la revendication 1, caractérisé par le fait que le composant (100) est un intégrateur, plus particulièrement un intégrateur constitué à l'aide de composants électroniques.

## Claims

1. A regulating unit for rotary or lifting drive mechanisms of a crane, in particular for ships, wherein, at the end of an inner spar (4) which may be rotated about a swivel joint (3) there is arranged an outer spar (11) which may be rotated about a swivel joint (10) and which possesses a loading apparatus (19), wherein the drive mechanisms (5, 6, 7; 13, 14, 15) of the inner spar and the outer spar are equipped with an angle of rotation regulating device (25, 31) which, in order to determine the angle of rotation $(\gamma)$ of the inner spar (4) relative to a reference line (9), possesses a theoretical value generator (24) which is provided with a control lever (23) and whose output signal $(\gamma_{soll})$ is used for adjustment of the angle of rotation $(\varepsilon)$ of the inner spar (4), being conducted to a regulator (25) for the rotary drive mechanism of the inner spar (4), and is used for the adjustment of the angle $(\gamma)$ of the outer spar (11) relative to the inner spar (4), being conducted to a function generator (30) which serves to form a theoretical angle value $(\varepsilon_{soll})$ which is dependent upon the angle of rotation $(\gamma)$ and the course of the transport path(s) and which, in order to determine the angle $(\varepsilon)$ between the inner spar (4) and the outer spar (11), is fed to a further regulator (31) for the rotary drive mechanism of the outer spar (11), characterised in that a component (100) followed by a computer (70, 69) is arranged between the theoretical value generator (24) provided with the control lever (23) and the function generator (30), wherein, in the component (100) an output signal $(\pm v.t)$ is formed which constantly increases in accordance with a predetermined and in particular linear function in dependence upon the time (t) from the output voltage which is emitted from the theoretical value generator (24) and is assigned to the deflection of the control lever (23), so that the computer (70, 69) calculates the time curve of the angle of rotation theoretical value $(\gamma_{soll})$ between the inner spar (4) and a reference line (9) and in dependence upon the output signal $(\pm v.t)$ of the component (100), upon the length (R) of the inner and outer spar between their centres of rotation, upon the distance $(y_o)$ of the load path (s) from the inner centre of rotation of the inner spar (4), and upon the vertical distance $(x_a)$ of the load (20) from the reference line (9) at the beginning of each transportation process.

**0 003 577**

2. A regulating unit as claimed in claim 1, characterised in that the component (100) is a potentiometer (99) adjusted by a drive motor (98) or a clock mechanism.

3. A regulating unit as claimed in claim 1 characterised in that the component (100) is an integrator and in particular an integrator constructed from electronic components.

FIG 1

FIG 2

FIG 3

2

FIG 4

FIG 5

0 003 577

23  24  98  99  100

87
88  $\vartheta_{soll}$  $\varepsilon_{soll}$

30

69  67  68  70

105  78  arc tg  85

$x_a$

97  $y_0$

$\vartheta_{soll E}$

1  $\dfrac{y_0}{R}$  R  $y_0$

72  × 75  76  77  × 79

$\vartheta_{soll E} + \varepsilon_{soll E}$

93  cos  +  89

$\dfrac{\sin \vartheta_{soll E} - \sin(\vartheta_{soll E} + \varepsilon_{soll E})}{\cos \vartheta_{soll E} - \cos(\vartheta_{soll E} + \varepsilon_{soll E})}$

sin  92

$x_a \pm vt$

$\left(\dfrac{x_a \pm vt}{y_0}\right)^2$

$\cos(\vartheta_{soll E} + \varepsilon_{soll E})$  $\sin(\vartheta_{soll E} + \varepsilon_{soll E})$

$\dfrac{R}{y_0}$

73

$\dfrac{2R}{y_0}$

80  $1 + \left(\dfrac{x_a \pm vt}{y_0}\right)^2$

95  −  96  −  94

$\cos \vartheta_{soll E} - \cos(\vartheta_{soll E} + \varepsilon_{soll E})$  $\sin \vartheta_{soll E} - \sin(\vartheta_{soll E} + \varepsilon_{soll E})$

$\left(\dfrac{2R}{y_0}\right)^2$

74

arc tg $\dfrac{x_a \pm vt}{y_0}$

81

$\cos \vartheta_{soll E}$  $\sin \vartheta_{soll E}$  $\vartheta_{soll E}$

91  cos  90  sin

$\dfrac{(2R/y_0)^2}{1 + \left(\dfrac{x_a \pm vt}{y_0}\right)^2}$

+ 82

arc tg $\sqrt{\dfrac{(2R/y_0)^2}{1 + \left(\dfrac{x_a \pm vt}{y_0}\right)^2} + 1}$

$\sqrt{\dfrac{(2R/y_0)^2}{1 + \left(\dfrac{x_a \pm vt}{y_0}\right)^2} + 1}$

$\dfrac{(2R/y_0)^2}{1 + \left(\dfrac{x_a \pm vt}{y_0}\right)^2} + 1$

$\vartheta_{soll}$  f  86  arc tg  84  83

# 0 003 577

FIG 6